# EUROPÄISCHE PATENTANMELDUNG

(11) **EP 2 701 138 A1**
(43) Veröffentlichungstag der Anmeldung: **26.02.2014**
(21) Anmeldenummer: 12181321.6
(22) Anmeldetag: 22.08.2012
(51) Int. Cl.: G09B 21/00

(54) **Sensor basierte interaktive Sehhilfe**

(71) Anmelder: Technische Hochshule Mittelhessen, 35390 Giessen (DE)
(72) Erfinder: Edelmann, Peter, 35687 Dillenburg (DE)
(74) Vertreter: Stumpf, Peter

(57) **Zusammenfassung**

Die vorliegende Erfindung stellt eine Vorrichtung und ein Verfahren sowie die sich daraus ergebenden Verwendungsmöglichkeiten für eine Sensor basierte interaktive Orientierungshilfe für Sehbehinderte bereit. Das Verfahren ermöglicht stark Sehbehinderten eine bessere Orientierung durch das Erkennen von Objekten.

Das programmbezogene Verfahren verarbeitet Abstands- und/oder Bildsignale sowie durch Spracheingabe übermittelte Zusatzinformationen des Sehbehinderten. Es identifiziert Objekte oder deren Bestandteile durch Segmentierung, ermittelt charakteristische Merkmale wie Größe, Form, Farbe und klassifiziert die Objekte. Das Ergebnis der Klassifikation wird dem Sehbehinderten ebenfalls über Sprachausgabe übermittelt und hilft ihm bei der Orientierung.

## Beschreibung

### Sensor basierte interaktive Sehhilfe

Die vorliegende Erfindung stellt eine Sensor basierte interaktive Vorrichtung und ein Verfahren sowie die sich daraus ergebenden Verwendungsmöglichkeiten für die Orientierung von Sehbehinderten bereit.

### Beschreibung und Einleitung des allgemeinen Gebietes der Erfindung

Die vorliegende Erfindung betrifft das Gebiet Medizintechnik.

### Stand der Technik

Die Orientierung stark sehbehinderter Menschen erfolgte bisher im Wesentlichen über mechanisches Tasten mit einem Blinden-Langstock. Durch dieses Tasten erhält der Sehbehinderte lediglich Distanzinformationen für eine sehr geringe Zahl von Punkten der Objekte in seiner Umgebung. Die Klassifikation erfolgt ausschließlich im Kopf des Sehbehinderten und ist auch unter Einbeziehung von Kontextinformationen (wie Küche, Bad, Bürgersteig) äußerst mühsam. Durch die geringe Zahl von Distanzpunkten besteht zudem die große Gefahr, Hindernisse in unmittelbarer Nähe (Lichtmast, Parkpfosten, Bürgersteigkante) zu übersehen.

Neben dem mechanischen Abtasten gibt es auch Sensor basierte Orientierungshilfen, bei denen die Distanzerkennung nicht über das mechanische Abtasten sondern per Sensor aus der Entfernung funktioniert. Dafür kommen verschiedene Sensortypen zum Einsatz. Hierzu gehören Ultraschallsensoren, Infrarotsensoren oder Lasersensoren. Sie geben Warnsignale aus und verhindern Kollisionen mit Hindernissen. Blindenstöcke mit eingebautem Infrarot -Abstandswarner sind in der Lage, eine gewisse kleine Umgebung auf einmal zu ertasten. Aber sie liefern meist keine Informationen über die einzelnen Abstände der ertasteten Objektpunkte sondern vermelden lediglich als Abstandswarner, dass innerhalb des ertasteten Bereichs ein Objektpunkt liegt. Aus dieser Information lassen sich keine Schlüsse über die Art des Objektes ziehen.

Der Einsatz von Datenspeicher und ein Prozessor für die Datenverarbeitung bei der Orientierungshilfe ist Stand der Technik. Jedoch gibt es nur wenige Sehhilfen, bei denen eine Objekterkennung zumindest ansatzweise ermöglicht wird. Technische Verfahren zur Objekterkennung existieren für spezielle Anwendungsbereiche (Gesichtserkennung, Schrifterkennung, Erkennen von Verkehrsschildern). Sie sind jedoch aus zweierlei Gründen für Sehbehinderte nicht praktikabel: Zum Einen erfordern Sie einen hohen technischen Aufwand (z.B. festinstallierte justierte Kamera, sehr hohe Rechenkapazität mit Stromversorgung) und zum Anderen erlauben sie nur die Erkennung von jeweils einem Typus von Objekten, auf die sie spezialisiert sind (entweder Gesichts- oder Schrift- oder Verkehrsschildererkennung).
Ein Erkennen von Objekten unterschiedlicher Art, wie sie umgebungsspezifisch in der Fußgängerzone, Geschäft, Wohnzimmer, Küche, Bad etc. vorkommen ist bisher nicht möglich.

So wird beispielsweise in der Patentschrift DE 000019930715 A1 ein Produkterkennungsgerät für Blinde und Sehbehinderte beschrieben, dass eine eindeutige Produktidentifikation beim Einkauf wie auch zu Hause ermöglicht. Es enthält ein digitales Speichermedium zur Speicherung der Produktarten sowie eine Leseeinheit zur Erfassung der Produktkennungen, insbesondere des üblichen Barcodes. Eine Geometrieerkennung eines Objekts im Raum ist hier nicht möglich. Es handelt sich in diesem Fall um ein Barcode-Ablesegerät, welches über einen Datenspeicher und interaktive Spracheingabe durch den Anwender auf seine individuellen Bedürfnisse hin ausgerichtet und auch "trainierbar" ist.

In der Patentschrift DE 10157921 B4 wird eine stabförmige, tragbare Videokamera beschrieben, die auch als Sehhilfe für Blinde eingesetzt werden kann. Zur automatischen Wiedergabe von Objektfarben, Objektkonturen und Schriften ist die erfindungsgemäße Videokamera mit einer Rechnereinheit ausgerüstet, auf dem eine Bildverarbeitungssoftware implementiert ist. Durch einen Kopfhörer oder Lautsprecher können die Bildinformationen akustisch wiedergegeben werden. Es können beispielsweise Ansagen über Farbe, Entfernung, Objektgrößen und Objektformen gemacht werden. Diese auch als Seh- und Orientierungshilfe für Sehbehinderte einsetzbare Videokamera mit akustischer Ausgabe von Bildinformationen beinhaltet zwar eine Rechnereinheit zur Bildauswertung, jedoch sind die hier benutzten Objektdatenbanken nicht interaktiv durch den Blinden trainierbar. Der Nachteil der beschriebenen Sehhilfe liegt darin, dass sich die Objektdatenbank nicht auf die spezielle Umgebung des Sehbehinderten trainieren lässt. Dementsprechend ist die Objekterkennung wesentlich weniger präzise. Es ist nur eine Ausgabe von Farbe, Entfernung und Objektgrößen und Objektformen möglich. Daraus muss dann der Anwender selbst noch den Schluss ziehen, um was für ein Objekt es sich handeln könnte. Insofern ist hier auch kein interaktives Trainieren möglich. In der Schrift DE 198 38 806 A1 wird ein Verfahren und eine Vorrichtung zur Erfassung von Objektfarben beschrieben. Nach der Bildaufnahme durch eine Digitalkamera oder einen Scanner werden die ermittelten Daten durch Klassifizierung und Segmentierung verarbeitet, so dass Farb- und Helligkeitswerte ausgegeben werden. Desweiteren können Größen- Positions- und Entfernungsbestimmungen durchgeführt werden. Objektgrenzen und damit Größen und Formen werden durch Segmentierung berechnet. Nachteil dieser Vorrichtung und dieses Verfahrens ist es jedoch, dass hier weder ein interaktives Erstellen von umgebungsspezifischen Objektdatenbanken möglich ist, noch kann das Erkennen von Objekten interaktiv erfolgen. Da keine Umgebungs- spezifischen Objektdatenbanken erstellt werden können, bedeutet die Klassifikation zur Objekterkennung einen enorm hohen Aufwand. Ein hohes Abstraktionsniveau ist auf diese Weise nicht erreichbar und daher nur eine begrenzte Objekterkennung möglich. Bei dem in dieser Schrift beschriebenen Verfahren wird detailliert nur auf die Farberkennung eingegangen. Eine Objekterkennung ist zwar erwähnt, jedoch wird ihre Realisierung nur mit Hinweis auf die aus dem Stand der Technik bekannten Prinzipien der Segmentierung und Klassifikation erwähnt. Algorithmen zur Segmentierung und Klassifikation sind dem Fachmann aus dem Stand der Technik zugänglich. Jedoch reichen diese allein noch nicht für eine in der Anwendung zufriedenstellende Objekterkennung aus. Ein interaktives Erstellen von umgebungsspezifischen Objektdatenbanken sowie eine Interaktion des Sehbehinderten mit der Orientierungshilfe im Rahmen der Erkennung würde eine erhebliche Reduktion des Aufwands für eine Klassifikation bedeuten. Dadurch wäre ein sehr viel höheres Abstraktionsniveau beim Erkennen von speziellen Objekten aus der individuellen Lebensumgebung des Sehbehinderten möglich.

### Aufgabe

Es ist daher die Aufgabe der Erfindung durch die Bereitstellung eines Verfahrens zur verbesserten Orientierungshilfe für Sehbehinderte, die oben genannten Nachteile teilweise oder gänzlich zu überwinden. Die Aufgabe der Erfindung ist es auch, Vorrichtungen zur Implementierung derartiger Verfahren anzugeben. Diese Aufgabe wird durch ein Verfahren bzw. eine Vorrichtung mit den Merkmalen gemäß Anspruch 1 bzw. 10 gelöst. Desweiteren soll die Erfindung eine breite Anwendungsmöglichkeit eröffnen, gemäß den Merkmalen von Anspruch 15. Ausführungsformen und Verwendungen der Erfindung ergeben sich aus den abhängigen Ansprüchen.

### Lösung der Aufgabe

Das erfindungsgemäße Verfahren umfasst mindestens die ersten vier der folgenden Verfahrensschritte:
● Ermittlung der Merkmale von einzelnen Objektpunkten für Objekte in der Umgebung des Sehbehinderten durch mindestens einen Sensor
● Segmentierung, d.h. Zusammenfassung "ähnlicher" Objektpunkte zu einem Segment durch einen Segmentierungsalgorithmus
● Berechnung der Merkmale der gebildeten Segmente mittels dafür geeigneter Programme
● Klassifikation der Segmente, d.h. Zuordnen der Segmente zu einem erlernten Objekt aus einer Objektdatenbank mit einem Klassifizierungsalgorithmus
● Abspeicherung der Merkmale erlernter Objekte in einer Objektdatenbank dadurch gekennzeichnet, dass
   es die Möglichkeit zur grafischen und/oder sprachlichen Interaktion während des Teach- und/oder Erkennungsprozesses gibt

Überraschend wurde gefunden, dass durch die Möglichkeit der interaktiven Eingabe ein bedeutend höheres Abstraktionsniveau und eine Informationsreduktion bei der Objekterkennung erreicht werden kann. Dabei bezieht sich die Interaktion auf die Eingabe von Kontextinformation (zur Umgebung des Sehbehinderten), das Trainieren der Objektdatenbank und die Konfiguration der Segmentierungs- und Klassifikationsalgorithmen. Mit Objekterkennung ist in dieser Erfindung die Benennung der Objekte gemeint, welche dem Sehbehinderten über Sprachausgabe durch einen Lautsprecher mitgeteilt wird, nach dem der Sehbehinderte mit einem Sensor seine Umgebung gescannt hat. Dabei ist die Objekterkennung nicht auf bestimmte Objekttypen wie z.B. Gesichter, Schrift oder Barcodes beschränkt.
Für die Vorrichtung zur Orientierung von stark Sehbehinderten werden moderne Hardware Komponenten, wie Sensoren z.B. Lasersensoren (6), Infrarotsensoren, Tiefensensoren (7), mobile Rechenkapazität z.B. iPhone (1) in Kombination mit intelligenten und durch den Sehbehinderten interaktiv steuerbaren Programm-Komponenten zur Ermittlung von Merkmalen einzelner Objektpunkte, Segmentierung, Klassifizierung und Sprachsteuerung implementiert.
Aus dem Verfahren ergeben sich vielfältige Verwendungsmöglichkeiten der Sehhilfe, wie z.B. das Führen des Sehbehinderten, die Navigation mit Warnmodus, das Erkennen von Objekten, das Suchen nach einem Objekt, das Anpeilen von Gegenständen, die Ermittlung der Farbe und die Umwandlung von Abstandsinformationen in ein Tonsignal. Die verschiedenen Funktionen des Systems sind über Spracheingabe durch den Sehbehinderten abrufbar.

Das erfindungsgemäße Verfahren, die daraus erhältliche Vorrichtung sowie die Verwendungsmöglichkeiten sind nachfolgend erläutert. Die Erfindung ist nicht auf eine der nachfolgend beschriebenen Ausführungsformen beschränkt sondern in vielfältiger Weise abwandelbar. Sämtliche aus den Ansprüchen, der Beschreibung und den Zeichnungen hervorgehenden Merkmale und Vorteile, einschließlich konstruktiver Einzelheiten, Verfahrensschritte und Verwendungen können sowohl für sich als auch in den verschiedensten Kombinationen erfindungswesentlich sein.

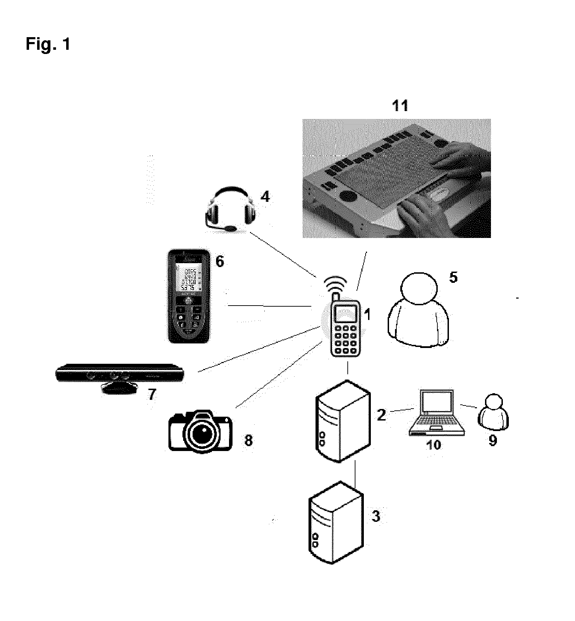

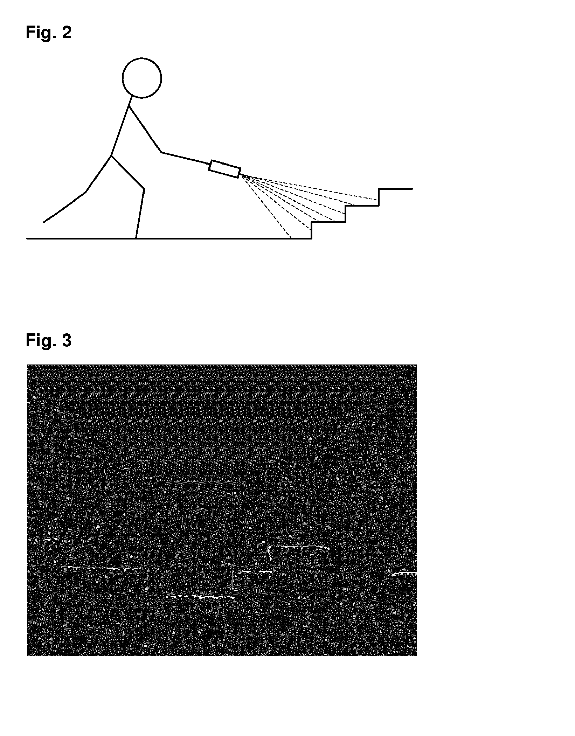

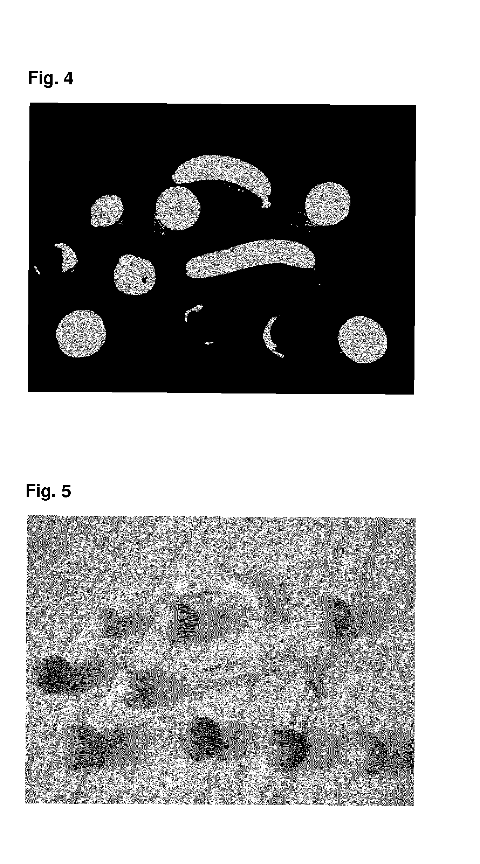

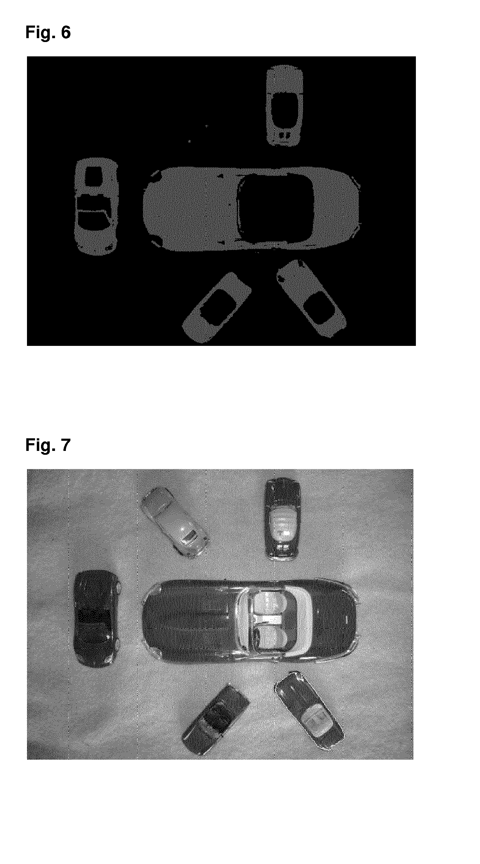

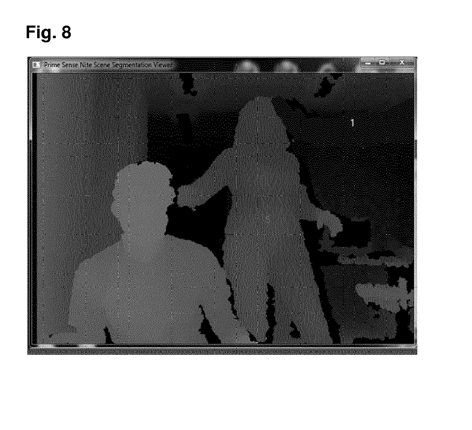

Im Folgenden werden die einzelnen Verfahrensschritte sowie die dabei verwendeten Vorrichtungskomponenten in verschiedenen Ausführungsformen beschrieben. Die Verfahrensschritte der Merkmalsermittlung von Objektpunkten, Segmentierung, Klassifikation und Merkmalsberechnung von Segmenten sind dem Fachmann bekannt und können ohne den Schutzbereich der Patentansprüche zu verlassen angewendet werden. Die Figuren 1 und 2 zeigen eine schematische Übersicht zu den Vorrichtungskomponenten, die für die einzelnen Verfahrensschritte eingesetzt werden. Dabei sind diese schematischen Übersichten nicht als Beschränkung für die Ansprüche zu verstehen sondern dienen lediglich dem Zweck, die Ansprüche bzw. die Vorrichtung leichter verständlich zu machen. Es können weitere Komponenten eingebaut werden oder/und einzelne Komponenten ausgetauscht oder weggelassen werden.
Die Reihenfolge der Verfahrensschritte kann variiert werden, was für bestimmte Anwendungsfunktionen sogar notwendig ist und in den Ausführungsbeispielen beschrieben ist. Die im Folgenden beschriebenen Verfahrensschritte beziehen sich sowohl auf die Anwendung als auch auf das Trainieren der Sehhilfe. Daraus ergibt sich, dass Nicht alle der im Folgenden beschriebenen Verfahrensschritte bei jeder Anwendungsfunktion oder Ausführungsbeispiel ablaufen.
Im Verfahrensschritt "Merkmalsermittlung der einzelnen Objektpunkte" erfolgt ein feingranularer Objektscan. Dabei wird mittels eines Sensors ein 1 oder 2 dimensionaler Scan über ein Objekt in der unmittelbaren Umgebung des Sehbehinderten durchgeführt. Der Sensor ermittelt für jeden Objektpunkt sowohl Distanz als auch Farbinformationen. Bevorzugt verwendete Sensoren sind UV-, Laser-, Tiefen- Sensoren oder eine Digitalkamera (8). Besonders bevorzugte Sensoren sind der Microsoft Kinect Tiefen-Sensor (7).
Die Merkmale der einzelnen Objektpunkte umfassen je nach verwendetem Sensor die Distanz relativ zum Sehbehinderten oder relativ zu anderen Objektpunkten. Der Sensor erfasst desweiteren den horizontalen und vertikalen Winkel relativ zur Bewegungsrichtung des Sehbehinderten und die Farbe des Objektpunktes.

Im Verfahrensschritt "Segmentierung" erfolgt das Zusammenfassen von Objektpunkten mit ähnlichen Merkmalen zu einem Segment. Programme bzw. Algorithmen zur Segmentierung sind dem Fachmann bekannt und kommerziell erhältlich. Im erfindungsgemäßen Verfahren hat der Sehbehinderte die Möglichkeit zur interaktiven Konfiguration des Segmentierungs-Algorithmus. Über Spracheingabe kann der Sehbehinderte Kriterien für die Segmentierung (z.B. Distanz, Farbe) eingeben.
Im Verfahrensschritt "Merkmalsberechnung" werden die Merkmale der Segmente berechnet. Die Merkmale der Segmente umfassen einige der folgenden Eigenschaften: Größe, Fläche, Form. Farbe, Textur und/oder Glanz. Der Verfahrensschritt zur Segmentierung kapselt Programme zur Berechnung der Merkmale der ermittelten Segmente.
Im Verfahrensschritt "Klassifikation" erfolgt die Klassifikation der Segmente. Unter Klassifikation versteht der Fachmann in Übereinstimmung mit dem sinngemäßen Gebrauch für diese Erfindung die Zuordnung der Segmente zu Objekten aus der Objektdatenbank. Die Zuordnung erfolgt mittels Programmen, die basierend auf den ermittelten Segmentmerkmalen eine Zuordnung zu denen in der Objektdatenbank gespeicherten Merkmalen der Objekte durchführen. Bevorzugt eingesetzte Software sind käufliche erhältliche Klassifikationsalgorithmen. In einer vorteilhaften Ausführungsform werden diese Klassifikationsalgorithmen so verändert, dass diese Programme über Spracheingabe interkativ konfigurierbar sind. Dadurch hat der Sehbehinderte die Möglichkeit, die Zuordnung der Segmente über Sprachsteuerung interaktiv zu beeinflussen. Sowohl beim Aufbau als auch beim Durchsuchen der Objektdatenbank werden die Algorithmen durch die Interaktionsmöglichkeiten beeinflusst.
Dem Fachmann sind Programme zur Segmentierung, Merkmalsberechnung und Klassifikation bekannt. Er kann sie anwenden, ohne den Schutzbereich der Patentansprüche zu verlassen. Die für diese Verfahrensschritte eingesetzten Vorrichtungskomponenten sind eine zentrale Recheneinheit. Dazu kann ein PC Server (2) oder eine mobile Recheneinheit verwendet werden.

Die beiden folgenden Verfahrensschritte dienen der interaktiven Eingabe.
Der Verfahrensschritt zur sprachgesteuerten Interaktion ermöglicht dem Sehbehinderten, die Segmentierung und Klassifikation zu beeinflussen, indem er z.B. die relevanten Distanzen, relevanten Merkmale oder den Klassifikationskontext spezifiziert. Desweiteren hat der Sehbehinderte über Spracheingabe die Möglichkeit die unterschiedlichen Anwendungsfunktionen des Systems anzusteuern. Die dafür benötigten Vorrichtungskomponenten umfassen Software und Hardware zur Spracheingabe und Sprachausgabe. Die Software definiert Eingabe-Sprachelemente, die zur Steuerung der Segmentierung und Klassifikation erforderlich sind und Ausgabe-Sprachelemente zur Information des Sehbehinderten über Bedienmöglichkeiten des Systems und erkannte Objekte. Dafür benötigte Bauteile sind ein PC (2) und ein Headset (4)

Der Verfahrensschritt zur grafischen Interaktion ermöglicht einem nicht sehbehinderter Helfer, die Objektdatenbanken zu trainieren. In einer vorteilhaften Ausführungsform ermöglicht das interaktive Teachen dem Helfer eine Abstraktion und Reduktion der Objektdatenbank, indem er etwa relevante Distanzen, relevante Objekte und deren Teilobjekte oder den Klassifikationskontext spezifiziert. Dieser Verfahrensschritt kapselt Programme zur grafisch interaktiven Eingabe von Objekten und deren relevanten Merkmalen. Als Vorrichtungsbauteil dienen ein Touch Screen oder ein Teach PC (10). Bevorzugt wird ein zu diesem Zweck ein Touch Screen eingesetzt.

Im Verfahrensschritt zur Abspeicherung der Merkmale erlernter Objekte werden Merkmale in umgebungsspezifischen Objektdatenbanken abgespeichert. Diese Objektdatenbanken sind über grafische oder sprachliche Eingabe oder interaktiv trainierbar. Sie dienen der Aufbewahrung einer umfangreichen Sammlung von Objekten aus der Umgebung des Sehbehinderten zusammen mit deren charakteristischen Merkmalen. Als Hardwarekomponente wird hierfür ein PC-Server für eine Objektdatenbank (3) eingesetzt.
In einer vorteilhaften Ausführungsform werden typische Gegenstände in einem bestimmten Kontext, z.B. der Wohnung des Sehbehinderten in die Datenbasis von einem sehenden Helfer eingebracht. Der sehende Helfer fokussiert die Gegenstände aus dem wahrscheinlichsten Blickwinkel mit der Kamera. Dazu gibt er über den Touchscreen den entsprechenden Objektnamen ein. Gegebenenfalls treten Form und Größe als Merkmale in den Hintergrund und die Oberflächenbeschaffenheit und Farbe spielen die entscheidende Rolle bei der Erkennung. Daher spezifiziert der sehende Helfer Kriterien und Toleranzen für die Segmentierung.
In einer weiteren vorteilhaften Ausführungsform erlaubt das Teachen dem sehenden Helfer durch geschickte Auswahl der Segmente zu spezifizieren, welche Segmente für das Objekt charakteristisch sind. Andere Segmente lässt er dann einfach weg. Z.B. sind zur Erkennung eines Fahrrades nur die beiden Räder und der Rahmen wesentlich. Details wie Klingel, Kette usw. müssen nicht selektiert und damit auch später nicht erkannt werden. Beim Teachen erfolgt also eine Abstraktion durch Weglassen.

Für die verschiedenen Funktionen des Systems werden die oben beschriebenen Verfahrensschritte so kombiniert werden, dass sich daraus die Funktionen wie z.B. Suchen nach einem Objekt, Ermitteln der Farbe, Navigation mit Warnmodus ergeben.
In einer vorteilhaften Ausführungsform der vorliegenden Erfindung tastet der Sehbehinderter mittels Touchscreen ein Bild ab und erhält abhängig von der Position der Fingerspitze gewünschte Informationen, z.B. Abstand oder Farbe des Punktes, oder mittlerer Abstand des Segmentes. Alternativ kann die Abstandsinformation auch in ein Tonsignal gewandelt werden.
In einer weiteren vorteilhaften Ausführungsform wird die mittels des Kinect Sensor erfasste Tiefeninformation in eine tastbare 3D Information umgewandelt, die der Sehbehinderte auf einer Stiftplatte ertasten kann. So können z.B. Gesichter, Unebenheiten auf dem Fußboden etc. über die Stiftplatte ertastet werden.
In einer weiteren vorteilhaften Ausführungsform der vorliegenden Erfindung wird der gesamte Scanbereich analysiert und führt zur Aufzählung aller erkannten Objekte.

In einer weiteren Ausführungsform der vorliegenden Erfindung ermöglicht das System unter Verwendung von existierender Software mittels Bild-Sensoren eine Gesichtserkennung.
In einer anderen besonderen Ausführungsform kann die existierende OCR Software und Bild-Sensoren zur Schrifterkennung genutzt werden.
Mittels einer weiteren Ausführungsform der vorliegenden Erfindung kann über mehrere in regelmäßigen Abständen hintereinander ausgeführte Scans die Bewegungsgeschwindigkeit eines erkannten Objektes ermittelt werden.

### Die Erfindung besitzt die folgenden Vorteile.

Stößt ein Sehbehinderter mit einem handelsüblichen Blindenstock gegen eine Treppe, so erhält er lediglich die Information "Mechanischer Widerstand in ca. 2m Entfernung auf Bodenhöhe". Er weiß nun nicht, ob es sich um eine Treppe, eine kleine Schwelle, einen Blumenkübel, ein Mülleimer oder eine Hauswand handelt.

Bei Verwendung des erfindungsgemäßen Verfahrens erhielte der Sehbehinderte hingegen direkt die Information "Treppe, 4 Stufen", "Blumenkübel", "Mülleimer" oder "Hauswand" über Sprachausgabe.

Das Verfahren liefert dem Sehbehinderten im Vergleich zum mechanischen manuellen Ertasten wesentlich mehr Informationen und auf einem sehr viel höheren Abstraktionsniveau.

Im Vergleich zu einer mechanischen Abtastung ermöglicht der Sensor zunächst einmal das Abtasten einer sehr viel größeren Zahl von Punkten eines Objektes in der Umgebung des Sehbehinderten in kurzer Zeit und mit einer hohen Präzision. Je nach Sensor werden für jeden Tastpunkt Raumkoordinaten, Distanz und oder Farbwert geliefert.
Für eine Klassifikation des ertasteten Objektes stehen daher wesentlich mehr und präzisere Daten zur Verfügung als im Falle des mechanischen Ertastens. Jedoch könnte die Fülle dieser Daten von einem menschlichen Gehirn nur mit großer Mühe gespeichert und verarbeitet werden. Daher besteht ein weiterer wesentlicher Vorteil darin, dass das System dem Sehbehinderten nicht wie beim manuellen mechanischen Abtasten die Merkmale (Rohdaten) der einzelnen Objektpunkte liefert sondern die Daten durch Segmentierung und Klassifizierung zu Informationen auf höheren Abstraktionsebenen verarbeitet, im Beispiel "Treppe" oder "Hauswand". Das System ist dabei in der Lage, in sehr kurzer Zeit sehr viele zuvor erlernte Objekte auf eine Übereinstimmung der Merkmale zu prüfen. So erhält der Sehbehinderte direkt über Sprachausgabe Bezeichnungen der erkannten Objekte.

In vielen Fällen wird das System jedoch nicht alleine in der Lage sein, die richtige Klassifizierung vorzunehmen, da z.B. die erkannten und gespeicherten Merkmale keine eindeutige Klassifizierung erlauben.
Daher besteht ein weiterer Vorteil des Verfahrens darin, dass der Sehbehinderte zur Unterstützung der Klassifizierung Suchkontexte, z.B. "Bürgersteig", "Toilette", "Bahnsteig", spezifizieren und einschränkende Filter, z.B. Abstand kleiner 2m, setzen kann. Die Klassifizierung des ertasteten Objektes entsteht so durch das intelligente Zusammenspiel des Systems mit dem Sehbehinderten. Der Sehbehinderte denkt mit und konfiguriert das System.
Darüber hinaus kann er bereits vor der Klassifizierung zur Unterstützung der Segmentierung Toleranzen spezifizieren, etwa um Objekte mit geringem Distanzunterschied, z.B. übereinander liegende Bücher, oder Objekte mit größerem Distanzunterschied, z.B. Pfosten oder Autos auf einem Parkplatz, unterscheiden zu können.

Handelt es sich bei dem ertasteten Objekt nicht um ein zuvor erlerntes Objekt, so kann der Sehbehinderte auch Merkmale, wie die Größe oder Farbe des Objektes direkt erfragen, um dann selbst basierend auf den durch das Verfahren gelieferten Merkmalen eine Klassifizierung vornehmen zu können. Auch in diesem Fall erhält er Informationen, z.B. die Größe eines Objektes, auf einem höheren Abstraktionsniveau im Vergleich zum manuellen mechanischen Ertasten.

Die Sensor Komponente "sieht" für den Sehbehinderten. Die Segmentierungs- und Klassifikationskomponenten analysieren für den Sehbehinderten in der oben beschriebenen Weise und die Sprachausgabe übersetzt das "Gesehene" in Sprache. Im Gehirn des Blinden entsteht auf Basis der über Sprachausgabe genannten Objekte und Eigenschaften ein Bild, wie beim Lesen eines Buches.

Das Verfahren erlaubt einem nicht sehbehinderten Helfer, die für den Sehbehinderten wesentlichen Objekte in die Objektdatenbasis einzufügen und deren wesentliche und für eine Erkennung charakteristischen Merkmale zu spezifizieren, z.B. die Geldbörse des Sehbehinderten mit den Merkmalen Farbe "blau", Breite "10 cm", Höhe "7 cm", Form "Rechteck" oder die spezielle Teekanne mit Farbe "grün", Form "Kugel". So reduziert sich die Klassifikation auf für den Sehbehinderten wesentliche Objekte in den für ihn wesentlichen Kontexten.

Weitere Vorteile gegenüber dem Stand der Technik sind die folgenden Merkmale der Erfindung:
● Ermittlung der Distanzmerkmale von Objektpunkten mittels Distanzsensor (z.B. Microsoft Kinect, 2D Laser)
● Ermittlung eines "Höhenprofils" (Eindimensionaler Scan) für nicht vollständig erfassbare große Objekte (z.B. Lichtmast, Treppe, Bürgersteigkante)
● Erstellen einer Objektbasis gesteuert durch eine interaktive Spezifikation von Bereichen und Toleranzen für Entfernungsinformationen
● Erstellen einer Objektbasis gesteuert durch eine interaktive Spezifikation von charakteristischen und für eine Erkennung wesentlicher Segmente (z.B. Fahrradrahmen und -reifen)
● Erstellen einer Objektbasis gesteuert durch eine interaktive Spezifikation des Kontextes für die Klassifikation (z.B. Bürgersteig oder Schreibtisch)
● Erkennen von Objekten gesteuert durch interaktive Spezifikation der relevanten Distanzmerkmale (z. B. horizontaler, vertikaler eindimensionaler Scan oder zweidimensionaler Flächenscan)
● Erkennen von Objekten gesteuert durch interaktive Spezifikation des Kontextes für die Klassifikation (z.B. Bürgersteig oder Schreibtisch)
● Erkennen von Objekten gesteuert durch interaktive Spezifikation der Merkmale für eine Suche (z.B. blau, rechteckig)
● Reaktion auf erkannte Objekten gesteuert durch interaktive Spezifikation verschiedener Funktionen des Systems (z.B. Führung, Freie Weglänge, Warnen)

### Bezugszeichenliste

- 1: i Phone
- 2: Zentrale Recheneinheit für Segmentation und Klassifikation
- 3: Server für Objektdatenbank
- 4: Headset
- 5: Sehbehinderter
- 6: Leico Disto Laser
- 7: Microsoft Kinect
- 8: Digital Kamera
- 9: nicht sehbehinderter Helfer
- 10: Teach PC
- 11: Stiftplatte

### Abbildungslegenden

Fig. 1
   Komponenten-Übersicht der erfindungsgemäßen Sehhilfe - Vorrichtung
Fig. 2
   Abtastung einer Treppenanlage mit 1 D Scan in Laufrichtung
Fig. 3
   1D Scan einer Treppenanlage. Ergebnis der Segmentierung (Zusammenfassung von Objektpunkten mit ähnlichen Merkmalen)
Fig. 4
   2 D Scan von Obst. Ergebnis der Segmentierung (Zusammenfassung von Objektpunkten mit ähnlichen Merkmalen)
Fig. 5
   2 D Scan von Obst. Das Ergebnis der Klassifikation besteht in der Wiedererkennung und Benennung der verschiedenen Obstsorten (Zuordnung von Elementen aus der Objektdatenbank).Dieses Ergebnis wird dem Blinden akustisch mitgeteilt.
Fig. 6
   2D Scan einer Autosammlung. Ergebnis der Segmentierung
Fig. 7
   Ergebnis der Klassifikation: Der Autotyp (hier z.B. Jaguar) wird wiedererkannt und dem Blinden akustisch mitgeteilt.
Fig. 8
   Ein Tiefenbild aufgenommen mit dem Tiefensensor "Microsoft Kinect"

### Ausführungsbeispiele

### Ausführungsbeispiel 1:

### Erstellen der Sehhilfe Vorrichtung

Als Hardware-Komponenten werden die in Bild 1 gezeigten Bauteile zusammen gestellt: ein iPhone 1, eine zentrale Recheneinheit 2 für die Software zur Segmentierung und Klassifikation, ein Server 3 für die Objektdatenbank , ein Headset 4, ein Microsoft Kinect Tiefensensor 7. Auf der zentralen Recheneinheit und dem Server werden folgende Softwarekomponenten installiert: käuflich erhältliche Programme zur Segmentierung, Klassifikation und Merkmalsberechnung, umgebungsspezifische Objektdatenbanken, ein Programm zur Definition von Spracheingabe- und Sprachausgabe-Elementen, ein Programm für die grafische Interaktion, ein Programm zum Kombinieren der verschiedenen Verfahrensschritte für die unterschiedlichen Verwendungsfunktionen der Sehhilfe.

### Ausführungsbeispiel 2:

### Teachen eines zusammengesetzten Objektes

● Kinect als Sensor
● Ein nicht sehbehinderter Helfer führt mittels des Kinect Sensors einen 2-dimensionalen Scan über ein spezielles zu erlernendes Objekt aus der Umgebung des Sehbehinderten durch.
● Er spezifiziert die Kriterien (auch Schwellenwerte genannt) für die Segmentierung, z.B. die Distanz oder die Farbe.
● Das System ermittelt Segmente basierend auf den spezifizierten Kriterien (Schwellenwerte) und präsentiert diese Segmente dem Helfer grafisch
● Der Helfer selektiert mittels Touch Screen grafisch interaktiv die zum Objekt gehörenden Segmente, z.B. besteht ein Kugelschreiber aus silberner Kappe und blauem Stift.
● Der Helfer spezifiziert die charakteristischen Merkmale der Segmente und deren Toleranzen für eine Klassifizierung, z.B. Form oder Farbe einschließlich tolerierter Abweichung.
● Der Helfer spezifiziert die charakteristischen Merkmale des Gesamtobjektes und deren Toleranzen für eine Klassifizierung, z.B. berühren sich Kappe und Stift eines Kugelschreibers und deren Hauptachsen liegen in derselben Richtung.
● Der Helfer spezifiziert die Beziehung des neuen Objektes zu bereits vorhandenen Objekten, z.B. Bestandteil, Vaterobjekt.
● Der Helfer speichert das Objekt in der Datenbasis
● Der Helfer spezifiziert den Namen des Objektes für die Sprachausgabe
● Die Verfahrensschritte werden mehrfach wiederholt.
● Das System ermittelt Mittelwerte und Standardabweichungen für Merkmale.
● Das Teachen erlaubt dem sehenden Helfer durch geschickte Auswahl der Segmente zu spezifizieren, welche Segmente für das Objekt charakteristisch sind. Andere Segmente lässt er dann einfach weg. Z.B. sind zur Erkennung eines Fahrrades nur die beiden Räder und der Rahmen wesentlich. Details wie Klingel, Kette usw. müssen nicht selektiert und damit auch später nicht erkannt werden. Beim Teachen erfolgt also eine Abstraktion durch Weglassen.

### Ausführungsbeispiel 3:

### Teachen eines Lichtmasts

● Laser als Sensor
● Kontext "Bürgersteig" mit Lichtmast in Laufrichtung des Sehbehinderten.
● Erlernen/Teachen des Objektes
● Der nicht sehbehinderte Helfer führt einen 1 dimensionalen Scan quer zur Laufrichtung über einen typischen Lichtmast auf dem von dem Sehbehinderten üblicherweise verwendeten Bürgersteig durch.
● Der Laser Sensor liefert die Distanz der Objektpunkte des Lichtmastes.
● Der Helfer spezifiziert die Toleranzwerte für die Distanz.
● Die Segmentierungskomponente fasst Objektpunkte mit ähnlicher Distanz zu Segmenten zusammen und ermittelt deren Merkmale, hier die Größe und die Form.
● Der Helfer selektiert das zum Lichtmast gehörende Segment mittels Touch Screen, spezifiziert die charakteristischen Merkmale, weist ihm per Spracheingabe den Objektnamen "Lichtmast" zu und speichert die Eingaben.

### Ausführungsbeispiel 4:

### Erkennen eines Mülleimers

● Microsoft Kinect als Sensor
● Kontext "Bürgersteig" mit Mülleimer in Laufrichtung des Sehbehinderten.
● Erlernen/Teachen des Objektes
● Der nicht sehbehinderte Helfer führt einen 2-dimensionalen Scan über einen typischen Mülleimer auf dem von dem Sehbehinderten üblicherweise verwendeten Bürgersteig durch.
● Der Kinect Sensor liefert Distanz und Farbe der Objektpunkte des Mülleimers.
● Die Messdaten des Sensors werden über Bluetooth zum iPhone des Sehbehinderten übertragen.
● Der Helfer spezifiziert die Toleranzwerte für die Distanz und die Farbe.
● Die Segmentierungskomponente fasst Objektpunkte mit gleicher Distanz zu Segmenten zusammen und ermittelt deren Merkmale, hier die Farbe, die Größe und die Form.
● Der Helfer selektiert das zum Mülleimer gehörende Segment mittels Touch Screen, spezifiziert die charakteristischen Merkmale, weist ihm per Spracheingabe den Objektnamen "Mülleimer" zu und speichert die Eingaben.
● Erkennen des Objektes
● Der Sehbehinderte führt einen 2-dimensionalen Scan quer zur Laufrichtung durch.
● Der Kinect Sensor liefert Distanz und Farbe der Objektpunkte des Mülleimers.
● Die Messdaten des Lasers werden über Bluetooth zum iPhone des Sehbehinderten übertragen.
● Die Segmentierungskomponente fasst Objektpunkte mit gleicher Distanz zu Segmenten zusammen und ermittelt deren Merkmale, hier die Farbe, die Größe und die Form.
● Die Klassifizierungskomponente ordnet das Segment mit der geringsten Distanz zum Sehbehinderten in dem gegebenen Kontext auf Grund der ermittelten Merkmale dem Objekt "Mülleimer" zu.
● Die Komponente zur Sprachausgabe informiert den Sehbehinderten über den "Mülleimer, Distanz 1 m" mittels einseitigem Kopfhörer.

### Ausführungsbeispiel 5:

### Erkennen einer Stufe

● Sensor Laser
● Kontext "Bürgersteig" mit Stufe in Laufrichtung des Sehbehinderten.
● Erlernen/Teachen des Objektes entfällt, da es sich um ein Standardelement handelt und bereits in der Objektbasis enthalten ist
● Erkennen des Objektes
● Der Sehbehinderte führt einen 1 dimensionalen Scan in Laufrichtung durch, indem er den Laser wie einen mechanischen Blindenstock in einem gewissen Winkelbereich in Laufrichtung bewegt.
● Der Laser liefert Distanz und Richtung über horizontalen und vertikalen Winkel für ca. 200 Punkte im gescannten Bereich zwischen 1 und 3 m vor dem Sehbehinderten. Der Abstand der Messpunkte beträgt daher ca. 1 cm.
● Die Segmentierungskomponente fasst Objektpunkte, die auf einer Linie liegen zu Segmenten zusammen und ermittelt deren Merkmale, hier die Länge.
● Die Klassifizierungskomponente erkennt die Topologie der Segmente (angrenzend, senkrecht) und ordnet sie in dem gegebenen Kontext dem Objekt "Stufe" zu.
● Die Komponente zur Sprachausgabe informiert den Sehbehinderten über die "Stufe, Distanz 2m" mittels einseitigem Kopfhörer.

### Ausführungsbeispiel 6:

### Gezieltes Abtasten eines Objektes

● In manchen Fällen führt die Klassifizierung zu keinem befriedigenden Ergebnis.
● Daher tastet der Sehbehinderte das Objekt direkt mit dem Sensor an Stelle der Hand ab und erhält Objektpunkt spezifische Informationen.
● Im Abtastmodus erfolgt z.B. die Ausgabe der Farbe, Textur, Entfernung etc. für die Bildmitte
● Die Vorgehensweise ähnelt dem manuellen Abtasten, liefert aber wesentlich mehr Informationen.
● Er verwendet also das System als ein intelligentes Sensorsystem für Sensoren, die er selbst leider nicht mehr besitzt, wie Sensoren für Farbe, Größe, Helligkeit, Textur, Form etc.
● In diesem Falle finden Segmentierung und Klassifikation im Kopf des Sehbehinderten statt.
● Merkmale, die ein Sehender auf einen Blick erfasst, werden von dem Sehbehinderten sequentiell mit Hilfe des Systems erfragt. Die Schnelligkeit der Analyse hängt dabei wesentlich von der Intelligenz und der Kombinationsfähigkeit des Blinden ab.

### Ausführungsbeispiel 7:

### Verfahrensschritte im Rahmen der gezielten Suche eines Objektes:

● Der Sehbehinderte führt mittels des Sensors einen 1 oder 2 dimensionalen Scan in seiner näheren Umgebung durch.
● Er teilt dem System über Spracheingabe das gesuchte Objekt und den Kontext mit, z.B. ein herunter gefallenes Schlüsselmäppchen, Fußboden.
● Das System ermittelt Segmente basierend auf den bekannten Merkmalen des Objektes, z.B. der blauen Farbe des Schlüsselmäppchens.
● Das System ermittelt charakteristische Merkmale der Segmente für eine Klassifizierung, z.B. Größe, Farbe und Form.
● Das System klassifiziert die Segmente im vorgegebenen Kontext. Die möglichen Ergebnisse der Klassifizierung werden dabei nach der Wahrscheinlichkeit der Übereinstimmung der Merkmale sortiert.
● Das System liefert dem Sehbehinderten das wahrscheinlichste Ergebnis über Sprachausgabe.
● Das System liefert dem Sehbehinderten die Position relativ zum Lot auf den Sensor über Sprachausgabe, z.B. 30 Grad Ost, 10 Grad Süd.
● Der Blinde kippt den Sensor solange bis das Objekt in Lotrichtung liegt.
● Der Blinde bewegt seine Hand oder sich selbst in Lotrichtung auf den Gegenstand zu.

### Ausführungsbeispiel 8:

### Verfahrensschritte im Rahmen der gezielten Suche eines Objektes. Alternatives Szenario:

● Zunächst wie oben, dann:
   ● Der Blinde parametrisiert interaktiv die Suche per Spracheingabe indem er etwa spezifische Merkmale des gesuchten Gegenstandes vorgibt, z.B. "Rechteck, Farbe Blau"
   ● Das System ermittelt Segmente basierend auf den angegebenen Merkmalen des gesuchten Objektes, z.B. der blauen Farbe des Schlüsselmäppchens.

### Ausführungsbeispiel 9:

### Verfahrensschritte im Rahmen der Orientierung eines Sehbehinderten:

● Der Sehbehinderter führt mittels des Sensors einen 1 oder 2 dimensionalen Scan in seiner näheren Umgebung durch
● Er spezifiziert ggf. die Kriterien für die Segmentierung, z.B. die maximale Distanz von Punkten in einem Segment oder die Farbe über Spracheingabe
● Das System ermittelt Segmente basierend auf den spezifizierten Kriterien, z.B. werden nach einem 1 dimensionalen Scan die Punkte auf einem Lichtmast unmittelbar vor dem Sehbehinderten auf Grund der Distanz zu einem Segment zusammengefasst, z.B. werden nach einem 2 dimensionalen Scan die Punkte auf einer blauen Geldbörse auf Grund der Farbe zu einem Segment zusammengefasst.
● Das System ermittelt charakteristische Merkmale der Segmente für eine Klassifizierung, z.B. Größe und gekrümmte Form des Lichtmast Segmentes oder blaue Farbe und rechteckige Form der Geldbörse.
● Der Sehbehinderte spezifiziert den Kontext für die Klassifikation über Spracheingabe, z.B. Bürgersteig im Falle des Lichtmastes oder Schreibtisch im Falle der Geldbörse.
● Das System klassifiziert die Segmente im vorgegebenen Kontext. Die möglichen Ergebnisse der Klassifizierung werden dabei nach der Wahrscheinlichkeit der Übereinstimmung der Merkmale sortiert.
● Das System liefert dem Sehbehinderten das wahrscheinlichste Ergebnis über Sprachausgabe.

### Ausführungsbeispiel 10:

### Verfahrensschritte im Rahmen der Orientierung eines Sehbehinderten. Alternatives Szenario:

● Zunächst wie oben, dann
● Der Sehbehinderte hält das wahrscheinlichste Ergebnis für nicht plausibel und erfragt die weniger wahrscheinlichen Ergebnisse.
● Der Sehbehinderte hält auch die weniger wahrscheinlichen Ergebnisse für nicht plausibel und erfragt z.B. Farbe und Größe des Objektes.
● Die Klassifizierung erfolgt nunmehr basierend auf den ermittelten Merkmalen im Kopf des Sehbehinderten.

### Ausführungsbeispiel 11:

### Verfahrensschritte im Rahmen der Führung

● Der Sehbehinderter teilt dem System über Spracheingabe das Führungsobjekt und den gewünschten Abstand mit, z.B. eine Bürgersteigkante, rechts, abfallend, 0,3 - 0,5 m.
● Der Sehbehinderte führt wiederholt mittels des Sensors einen 1 dimensionalen Scan quer zur Bewegungsrichtung auf dem Boden durch, ähnlich einem Abtasten durch einen Langstock.
● Das System ermittelt für jeden Scan Segmente basierend auf den bekannten Merkmalen des Führungsobjektes.
● Das System klassifiziert die Segmente im vorgegebenen Kontext und identifiziert das Führungsobjekt, z.B. eine abfallende Bürgersteigkante.
● Das System korrigiert die Bewegungsrichtung des Sehbehinderten per Sprachausgabe, wenn z.B. der Abstand zur Bürgersteigkante aus dem spezifizierten Intervall herausfällt.

### Ausführungsbeispiel 12:

### Verfahrensschritte im Rahmen der Führung. Alternatives Szenario:

● Das System führt den Sehbehinderten entlang einer Wand oder einer Bürgersteigkante.
● Es korrigiert den Sehbehinderten, wenn z.B. der Abstand zur Bürgersteigkante aus einem Intervall um einen spezifizierten Wert herausfällt.
● Wenn die maximale freie Weg-Länge nicht mehr im Zentrum des Scans liegt, wird die Bewegungsrichtung korrigiert (vgl. Funktion "Anpeilen")

### Ausführungsbeispiel 13:

### Funktion "Fußgängerzone":

Eine schnelle Bewegung in einer Fußgängerzone mit vielen Personen ermöglicht keine wirkliche Objekterkennung.
Mittels Kinect kann aber etwa in Kniehöhe oder Brusthöhe ein Hindernisprofil als 1 dimensionaler horizontaler Scan erstellt und interpretiert werden.
Die Software analysiert den Scan und ermittelt die freien Weglängen für alle Richtungen in einem bestimmten Winkel um die Bewegungsrichtung. Sie bestimmt anschließend die größte freie Weg-Länge und korrigiert die Bewegungsrichtung des Sehbehinderten über Sprachausgabe, z.B. 10 Grad links, zur Vermeidung einer Kollision.
Der Scan ermöglicht darüber hinaus die Ausgabe von Warnton und Richtung, falls Abstandswert in Laufrichtung unterschritten wird.

### Ausführungsbeispiel 14:

### Funktion "Warnen":

● Der Sehbehinderte führt in regelmäßigen und kurzen Abständen Scans durch.
● Das System warnt den Sehbehinderten, wenn sich in Bewegungsrichtung (= Mitte des gescannten Winkelbereichs) ein Hindernis befindet.
● Der Sehbehinderten kann die Warnfunktion selektiv ab- bzw. anschalten, z.B. Warnen nur im Falle von Pfosten, Treppen, keine Personen oder Personen nur in sehr geringem Abstand.

### Ausführungsbeispiel 15:

### Funktion "Anpeilen":

● Diese Funktion kann z.B. nach dem Erkennen einer Fußgängerampel per Sprachengabe aktiviert werden.
● Der Sehbehinderte bewegt sich auf die erkannte Ampel zu und führt dabei in regelmäßigen und kurzen Abständen horizontale Scans durch.
● Wandert der Pfosten der Ampel aus der Mitte wird der Sehbehinderte korrigiert in seiner Bewegungsrichtung, z.B. durch die Ansage "10 Grad links".

### Ausführungsbeispiel 16:

### Interaktive Steuerung der Analyse:

● Das System meldet dem Sehbehinderten im Übersichts-Modus das Ergebnisse der Grobanalyse, z.B. "2 Flaschen".
● Der Sehbehinderte erfragt die Farb-Attribute der erkannten Objekte. Das System liefert die Farbe "rot" und "weiß".
● Der Sehbehinderte nähert sich mittels Such Funktion der roten Flasche und scannt diese erneut aus geringer Entfernung. Das Bild der roten Flasche wird analysiert und etwa ein Etikett erkannt. Der Sehbehinderte lässt das Etikett gezielt mittels OCR Schrifterkennung analysieren.
● Die Grobsteuerung der Analyse erfolgt also im Kopf des Blinden. Die Feinsteuerung erfolgt in Form der Programme zur Segmentierung und Klassifizierung. Der Sehbehinderte erzeugt quasi mittels Spracheingabe den Inspektionsplan. Der Plan wird jedoch nicht vollständig im Voraus erstellt sondern in Abhängigkeit von den Zwischenergebnissen.
● Die Informationen ergeben sich durch das Zusammenspiel des Sensors, der Programme zur Segmentierung und Klassifizierung und dem Gehirn des Sehbehinderten.

## Patentansprüche

1. Sensor basiertes interaktives Verfahren zur Orientierung von Sehbehinderten umfassend mindestens die ersten vier der folgenden Verfahrensschritte:
● Ermittlung der Merkmale von einzelnen Objektpunkten für Objekte in der Umgebung des Sehbehinderten durch mindestens einen Sensor
● Segmentierung, d.h. Zusammenfassung "ähnlicher" Objektpunkte zu einem Segment durch einen Segmentierungsalgorithmus
● Berechnung der Merkmale der gebildeten Segmente mittels dafür geeigneter Programme
● Klassifikation der Segmente, d.h. Zuordnen der Segmente zu einem erlernten Objekt aus einer Objektdatenbank mit einem Klassifizierungsalgorithmus
● Abspeicherung der Merkmale erlernter Objekte in einer Objektdatenbank
**dadurch gekennzeichnet, dass**
es die Möglichkeit zur grafischen und/oder sprachlichen Interaktion während des Teach- und/oder Erkennungsprozesses gibt.

2. Sensor basiertes interaktives Verfahren zur Orientierung von Sehbehinderten gemäß einem der vorherigen Ansprüche **dadurch gekennzeichnet, dass** es über Spracheingabe und/oder grafische Interaktion, die Möglichkeit zur interaktiven Konfiguration der Segmentierungs- und/oder Klassifizierungs- Programme gibt.

3. Sensor basiertes interaktives Verfahren zur Orientierung von Sehbehinderten gemäß einem der vorherigen Ansprüche **dadurch gekennzeichnet, dass** die Algorithmen, die für den Aufbau der Objektdatenbank genutzt werden, interaktiv konfigurierbar sind.

4. Sensor basiertes interaktives Verfahren zur Orientierung von Sehbehinderten gemäß einem der vorherigen Ansprüche **dadurch gekennzeichnet, dass** die Algorithmen, die für das Durchsuchen der Objektdatenbank genutzt werden, interaktiv konfigurierbar sind.

5. Sensor basiertes interaktives Verfahren zur Orientierung von Sehbehinderten gemäß einem der vorherigen Ansprüche **dadurch gekennzeichnet, dass** durch interaktive Eingabe von relevanten Distanzen und/oder relevanten Merkmalen und/oder Kontextinformationen eine höhere Abstraktion und Reduktion der Objektdatenbank erreicht wird.

6. Sensor basiertes interaktives Verfahren zur Orientierung von Sehbehinderten gemäß einem der vorherigen Ansprüche **dadurch gekennzeichnet, dass** es über grafische Interaktion die Möglichkeit gibt, neue Objekte zu erlernen.

7. Sensor basiertes interaktives Verfahren zur Orientierung von Sehbehinderten gemäß einem der vorherigen Ansprüche **dadurch gekennzeichnet, dass** das Programm zur Segmentierung sprachgesteuert interaktiv durch den Sehbehinderten konfiguriert wird, indem der Sehbehinderte Schwellwerte für die Segmentierung eingibt.

8. Sensor basierte interaktives Verfahren zur Orientierung von Sehbehinderten gemäß einem der vorherigen Ansprüche **dadurch gekennzeichnet, dass** das Programm zur Merkmalsberechnung der Segmente eines oder mehrere der folgenden Merkmalskategorien erfasst: Größe, Fläche, Form, Farbe, Textur und Glanz.

9. Sensor basiertes interaktives Verfahren zur Orientierung von Sehbehinderten gemäß einem der vorherigen Ansprüche **dadurch gekennzeichnet, dass** die Sprachsteuerung dem Sehbehinderten erlaubt, die verschiedenen Funktionen des Systems, die in Anspruch 15 aufgelistet sind, zu bedienen

10. Sensor basierte interaktive Vorrichtung zur Orientierung von Sehbehinderten umfassend folgende Komponenten:
● Komponenten zur Ermittlung der Merkmale von einzelnen Objektpunkten
● Programm zur Segmentierung, d.h. Zusammenfassung von Objektpunkten mit ähnlichen Merkmalen zu einem Segment
● Programm zur Merkmalsberechnung der gebildeten Segmente
● Programm zur Klassifikation der Segmente, d.h. Zuordnen der Segmente zu einem erlernten Objekt
● Objektdatenbank zur Abspeicherung der Merkmale erlernter Objekte
**dadurch gekennzeichnet dass**,
● Komponenten für die sprachliche Interaktion vorhanden sind
● Komponenten für die grafische Interaktion vorhanden sind

11. Sensor basierte interaktive Vorrichtung zur Orientierung von Sehbehinderten gemäß einem der vorherigen Ansprüche **dadurch gekennzeichnet, dass** die Komponente zur Merkmalsermittlung der Objektpunkte eine oder mehrere der folgenden Bauteile umfasst:
Lasersensor, Ultraschallsensor, Infrarotsensor, Digitalkamera, Videokamera und/oder Tiefensensor

12. Sensor basierte interaktive Vorrichtung zur Orientierung von Sehbehinderten gemäß einem der vorherigen Ansprüche **dadurch gekennzeichnet, dass** der Tiefensensor das Gerät "Mircosoft Kinect" ist.

13. Sensor basierte interaktive Vorrichtung zur Orientierung von Sehbehinderten gemäß einem der vorherigen Ansprüche **dadurch gekennzeichnet, dass** die Komponente für die sprachgesteuerte Interaktion neben der erforderlichen Hardware auch Software beinhaltet, die Eingabe-Sprachelemente definiert, welche für die Steuerung der Segmentierung und Klassifikation erforderlich sind ebenso wie Ausgabe-Sprachelemente zur Information des Sehbehinderten über erkannte Objekte und Bedienmöglichkeiten des Systems.

14. Sensor basierte interaktive Vorrichtung zur Orientierung von Sehbehinderten gemäß einem der vorherigen Ansprüche **dadurch gekennzeichnet, dass** die Komponente für grafische Interaktion ein Touch Screen ist.

15. Verwendung einer Sensor basierten interaktiven Vorrichtung zur Orientierung von Sehbehinderten beinhaltend mindestens eine der folgenden Funktionen:
● das Führen des Sehbehinderten
● die Navigation mit Warnmodus
● das Erkennen von Objekten
● das Suchen nach einem Objekt
● das Anpeilen von Gegenständen
● das Ermitteln der Farbe
● die Gesichtserkennung
● die Schrifterkennung
● die Umwandlung der vom Sensor erfassten Tiefeninformation in eine tastbare 3D Information
● Umwandlung von Abstandsinformationen in ein Tonsignal
● Erfassen von schnellen Bewegungen und Bewegungsrichtungen
